(19) Europäisches Patentamt
European Patent Office
Office européen des brevets

(11) **EP 2 781 887 B1**

(12) **EUROPEAN PATENT SPECIFICATION**

(45) Date of publication and mention
of the grant of the patent:
**10.08.2016 Bulletin 2016/32**

(51) Int Cl.:
*G01D 5/20* (2006.01)   *F16C 32/04* (2006.01)

(21) Application number: **13305321.5**

(22) Date of filing: **19.03.2013**

(54) **Variable inductance type position sensor system and method**

Positionssensorsystem und -verfahren mit variabler Induktanz

Système de capteur de position de type à inductance variable et procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.09.2014 Bulletin 2014/39**

(73) Proprietor: **SKF MAGNETIC MECHATRONICS
27950 Saint-Marcel (FR)**

(72) Inventor: **Schroeder, Ulrich
76130 MONT-SAINT-AIGNAN (FR)**

(74) Representative: **Desormiere, Pierre-Louis et al
Cabinet Beau de Loménie
158, rue de l'Université
75340 Paris Cedex 07 (FR)**

(56) References cited:
**US-A- 5 844 339    US-A1- 2012 263 577**

**Description**

BACKGROUND OF THE INVENTION

1. Field of the Invention

The present invention relates to a variable inductance type position sensor system and to a method for sensing the radial position of a rotor. The invention may be applied in particular for sensing the radial position of a rotor equipped with magnetic bearings.

2. Description of the Related Art

A radial shaft position sensor is used in particular for sensing the radial position of a shaft or rotor which is suspended with respect to a stationary frame with active magnetic bearings without mechanical contact between the shaft and the stationary frame. The radial shaft position sensor is an important element for the performance of the controlled system. The main requirements of a control system including radial position sensors are: low drift, high stability, high linearity, high signal to noise ratio, high bandwidth, robustness and immunity against electromagnetic pollution, minimum of couplings between actuators, switching amplifiers and sensor signal, as well as mechanical robustness.

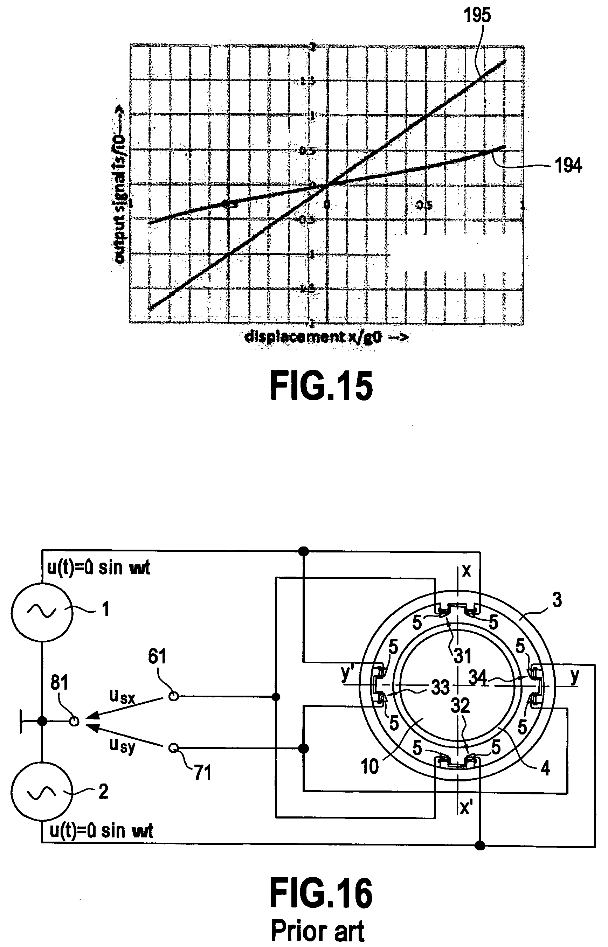

An example of a radial sensor system known in the art is illustrated in Fig. 16. Such inductive type radial sensor system uses inductive type gap sensors which are mounted in a Wheatstone bridge. Fig. 16 schematically shows a sensor stator 3 constituted by a stationary magnetic circuit which is generally a stack of thin silicon iron laminations (typical thickness: 0.1 to 0.35 mm). A ring-shaped rotor target 4 is also a stack of thin laminations, shrunk or glued on a shaft 10. For the sketched 2-axis system sensing a radial position of the rotor target 4 with respect to the sensor stator 3 along two mutually perpendicular axes X-X' and Y-Y', four sensing elements 31 to 34 are required.

Each sensing element 31 to 34 includes two pole pieces and should include at least one coil 5. In the example shown in Fig. 16, eight sensor coils 5 are arranged as sketched around each pole of the four sensing elements. Thus in this example each sensing element comprises two coils 5 wound around two pole pieces. Each displacement axis X-X' respectively Y-Y' has two sensing elements 31, 32 respectively 33, 34 which are arranged in a bridge. The bridge is excited by a split carrier voltage source, including a first AC voltage source 1 and a second AC voltage source 2 of fixed frequency and amplitude (typically 20 to 100 kHz, 5V to 50V).

The returned bridge voltages $u_{sx}$ 6 and $u_{sy}$ 7 include the desired amplitude modulated rotor displacement information. The voltage 6 is taken between a common connection point 61 which is common to the sensing elements 31 and 32 of the X-X' axis and a connection point 81 which is common to the first and second AC voltage sources 1, 2 and is connected to the ground. The voltage 7 is taken between a common connection point 71 which is common to the sensing elements 33 and 34 of the Y-Y' axis and a connection point 81 which is common to the first and second AC voltage sources 1, 2 and is connected to the ground. The position information -which is obtained after a synchronous demodulation- is zero when the rotor is in the center position.

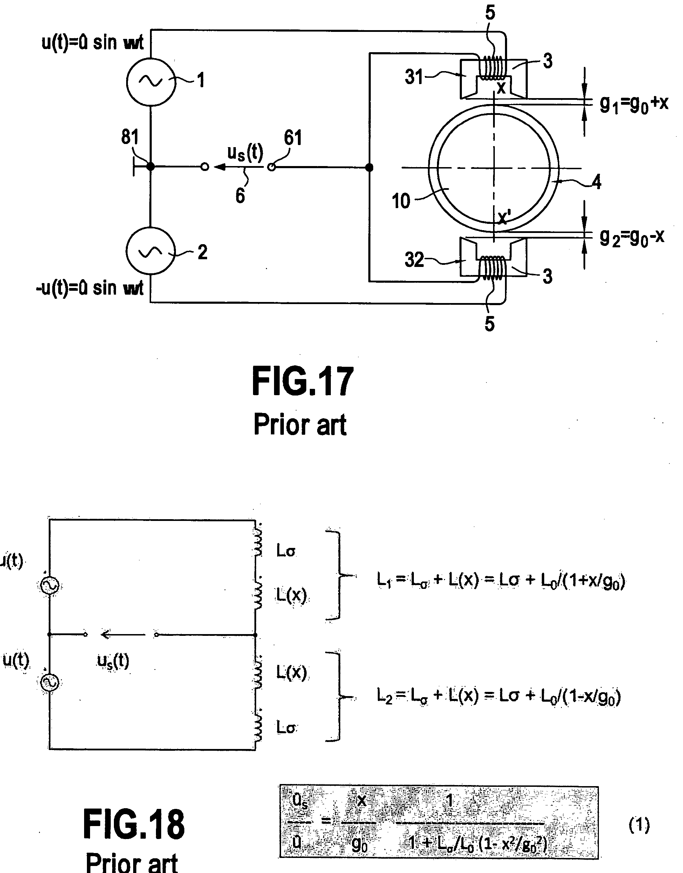

Fig. 17 illustrates the principle of operation of the state of the art concept of radial sensing device of Fig. 16 for the axis X-X', the principle being the same for the second axis Y-Y'. The air gaps of the sensing elements 31 and 32 are given by the following equations:

$$g_1 = g_0 + x$$

$$g_2 = g_0 - x$$

where $g_0$ is the nominal value of the air gap when there is no displacement of the shaft 10 and x is the displacement of the shaft 10 along the X-X' axis which is to be sensed by the sensing elements 31 and 32 and may be derived from the voltage $u_s(t)$ 6 which is detected between the connection points 61 and 81.

Fig. 18 shows the corresponding electrical model.

Each inductive sensor element 31, 32 having at least one inductance coil 5 is represented by a serial connection of two inductances. $L_\sigma$ is the leakage inductance which does not change when the sensor gap is changing.

The inductance values $L_1(x)=L_0* 1/(1+x/g_0)$ and $L_2(x)= L_0* 1/(1-x/g_0)$ depend on the displacement x as shown. $L_0$ corresponds to the value of the variable part of the inductance when the displacement x is zero. In this case the sensor gap has the nominal value $g_0$.

The equation for the bridge voltage shows that the ratio $L_\sigma/L_0$ has an important influence on the sensitivity and linearity of the system: the higher the leakage the lower the sensitivity and linearity. In a practical system, this ratio may be bigger than zero and may be around 1. Typically, the ratio can vary between about 0.5 up to 1.5.

The above described system fulfills many technical requirements. However, in practice there are some noise-, coupling- and linearity problems to be solved. In order to obtain a good signal to noise ratio, it is necessary to operate with high excitation voltage amplitudes and this generally leads to high cost and high power consumption. Many noise problems are caused by the fact that the "sensing wire" between the sensor and the electronics has high impedance with respect to ground. High frequency switching noise is coupled to this "floating" wire. So the system requires careful shielding of sensing wires, which increases the cost.

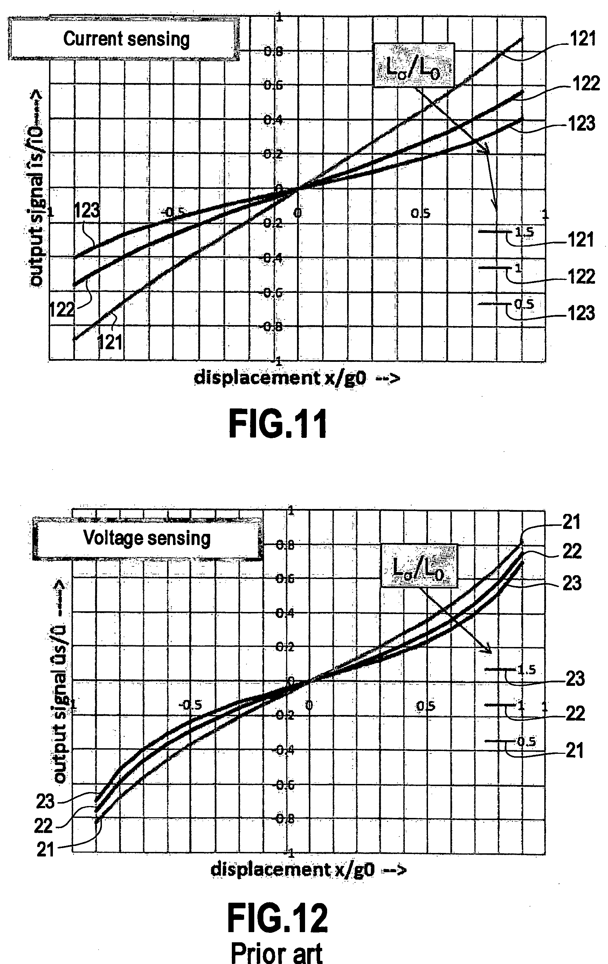

Around the zero position the linearity of the state of the art system is satisfactory, but when the requested displacement detection range is close to the nominal sensor gap the non-linearity becomes an issue as illustrated in Fig. 12 which shows the output signal of the sensing device as a function of the displacement $x/g_0$ for different values 0.5, 1 and 1.5 of the ratio $L_\sigma/L_0$ (curves 21 to 23).

Document US 2012/0263577 A1 discloses a device for detecting the axial position of a rotary shaft and its application to a turbo-molecular pump. A capacitor is connected in parallel with the coil of the axial detecting device and the current which flows through this parallel arrangement from the AC voltage source to ground is sensed.

Document US 5844339 A discloses an active magnetic bearing with auto position detection and a method for a radial active self-sensing magnetic bearing using the actuator coils for position sensing. There is no use of discrete position sensors that are distinct from the electromagnets which support the suspended body."

SUMMARY OF THE INVENTION

The technical problem to be solved is to provide a radial variable inductance type sensor system which remedies the above-mentioned drawbacks.

More specifically the invention aims at improving the linearity and the signal/noise ratio.

The invention further aims at allowing the possibility of using big cable lengths without any need for shielded cables.

Another aim of the present invention is to have a simplified electronic circuitry, enabling a lower power consumption and a lower cost.

The invention is defined in the appended claims.

The invention more specifically relates to a variable inductance type position sensor system comprising a rotor target of ferromagnetic material constituting a ring fixed on a rotary shaft and a stationary magnetic circuit which is placed around said rotor target, said stationary magnetic circuit comprising at least a first sensing element located along a predefined first axis X-X' in front of the rotor target while leaving an air gap between said first sensing element and the rotor target, said first sensing element receiving at least one induction coil, characterized in that a first end of said at least one induction coil of said first sensing element is connected to a first end of a first AC voltage source, and a second end of said at least one induction coil of said first sensing element is connected to a first connection point, which is connected to a second end of said first AC voltage source, said second end of said first AC voltage source being connected to a reference voltage and a detector device being interposed between said first connection point and said second end of said first AC voltage source in order to deliver information about the magnitude of the current flowing between said first connection point and said second end of said first AC voltage source, said information representing the value of a modification x to the width of said air gap that presents a predetermined nominal value $g_0$ along said first axis X-X'.

The rotor target may be made of ferrite or may be constituted by a ferromagnetic lamination or by a stack of ferromagnetic laminations.

The stationary magnetic circuit may be made of ferrite or may be constituted by a stack of ferromagnetic laminations.

According to a preferred embodiment the reference voltage is equal to 0 volt.

The variable inductance type position sensor system according to the invention may further comprise a demodulation circuit comprising a square former connected to the first end of the first AC voltage source, a 90° phase shifter, a synchronous rectification circuit connected to said detector device and a low pass filter.

According to an embodiment of the invention, the variable inductance type position sensor system further comprises a capacitor $C_2$ connected in parallel between the first end of the first AC voltage source and the first connection point.

According to another embodiment of the invention, the variable inductance type position sensor system further comprises a capacitor $C_1$ connected in series between the first connection point and the second end of the at least one induction coil of the first sensing element to provide a linearizing effect.

According to another embodiment of the variable inductance type position sensor system according to the invention, the stationary magnetic circuit comprises a second sensing element located along the predefined first axis X-X' on opposite side of the rotor target 104 with respect to the first sensing element 131 while leaving an air gap between the second sensing element 132 and the rotor target, the second sensing element receiving at least one induction coil, a first end of the at least one induction coil of the second sensing element being connected to a first end of a second AC voltage source, and a second end of the at least one induction coil of the second sensing element being connected to the first connection point which constitutes a first common connection point and which is connected to a second end of the second AC voltage source which constitutes a second common connection point which is common to the second end of the first AC voltage source being connected to the reference voltage.

The first and second AC voltage sources may be constituted by a split reference voltage oscillator having a fixed frequency and amplitude and generating a sinusoidal carrier of opposite signs.

According to another embodiment, the stationary magnetic circuit further comprises third and fourth sensing elements located along a predefined second axis Y-Y' which is perpendicular to the first axis X-X', on opposite sides of the rotor target while leaving an air gap between the third and fourth sensing elements and the rotor target, the third and fourth sensing elements each receiving at least one induction coil, a first end of the at least one induction coil of the third sensing element being connected to a first end of the first AC voltage source, a first end of the at least one induction coil of the fourth sensing element being connected to a first end of a second AC voltage source and second ends of the third and fourth sensing elements being connected to a third common connection point, which is connected to the second ends of the first and second AC voltage sources having themselves the second common connection point which is connected to the reference voltage, a second detector device being interposed between the second and third common connection points in order to deliver information about the magnitude of the current flowing between the second and third connection points, the information representing the value of a modification to the width of said air gap that presents a predetermined nominal value $g_0$ along the second axis Y-Y'.

The invention further relates to a variable inductance type method for sensing the radial position of a rotor target of ferromagnetic material constituting a ring fixed on a rotary shaft with respect to a stationary magnetic circuit which is placed around said rotor target, said method comprising the steps of arranging in the stationary magnetic circuit at least a first sensing element located along a predefined first axis X-X' in front of the rotor target while leaving an air gap between the first sensing element and the rotor target, and providing the first sensing element with at least one induction coil, characterized in that it further comprises the steps of connecting a first end of the at least one induction coil of the first sensing element to a first end of a first AC voltage source, connecting a second end of the at least one induction coil of the first sensing element to a first connection point, connecting the first connection point to a second end of the first AC voltage source, connecting the second end of the first AC voltage source to a reference voltage and interposing a detector device between the first connection point and the second end of the first AC voltage source in order to deliver information about the magnitude of the current flowing between the first connection point and the second end of the first AC voltage source, said information representing the value of a modification x to the width of said air gap that presents a predetermined nominal value $g_0$ along the first axis X-X'.

According to a specific embodiment the variable inductance type method according to the invention further comprises the step of connecting a capacitor $C_2$ in parallel between the first end of the first AC voltage source and the first connection point.

According to another specific embodiment, the variable inductance type method according to the invention further comprises the step of connecting a capacitor $C_1$ in series between the first connection point and the second end of the at least one induction coil of the first sensing element.

The invention further relates to a rotary electrical machine or a radial magnetic bearing device comprising a variable inductance type position sensor system as defined above.

BRIEF DESCRIPTION OF THE DRAWINGS

Fig. 1 is a schematic view of a variable inductance type radial position sensing system with a single element sensor;
Fig. 2 shows different curves giving the output signal as a function of the displacement for different values of the leakage inductance of the sensing system of Fig. 1;
Fig. 3 is a schematic view of a variable inductance type radial position sensing system with a single element sensor ;
Fig. 4 shows different curves giving the output signal as a function of the displacement for different values of the leakage inductance of the sensing system of Fig. 3;
Fig. 5 is a schematic view of a variable inductance type radial position sensing system with a single element sensor according to an embodiment of the invention;
Fig. 6 shows different curves giving the output signal as a function of the displacement for the sensing systems of Figs. 3 and 5;

Fig. 7 is a schematic view of a variable inductance type radial position sensing system with a single element sensor according to the invention with an example of circuits for processing the sensor signal ;

Fig. 8 shows the time dependency of different signals processed by the system illustrated in Fig. 7 or Fig. 9;

Fig. 9 is a schematic view of a variable inductance type radial position sensing system with a bridge arrangement of element sensors according to a further embodiment of the invention with an example of circuits for processing the sensor signal;

Fig. 10 is a schematic view of an electrical model of the variable inductance type radial position sensing system of Fig. 9;

Fig. 11 shows different curves giving the output signal as a function of the displacement for the sensing system of Fig 10;

Fig. 12 shows different curves giving the output signal as a function of the displacement for the sensing system of the prior art illustrated in Fig 16;

Fig. 13 is a schematic view of a variable inductance type radial position sensing system with a bridge arrangement of element sensors according to a further embodiment of the invention which comprises sensor elements along two mutually perpendicular axes;

Fig. 14 is a schematic view of a variable inductance type radial position sensing system with a bridge arrangement of element sensors according to a further embodiment of the invention which comprises sensor elements along two mutually perpendicular axes and linearizing capacitors;

Fig. 15 shows two curves giving the output signal as a function of the displacement for the sensing systems of Figs. 13 and 14 respectively;

Fig. 16 is a schematic view of a variable inductance type radial position sensing system of the prior art with a bridge arrangement of element sensors which comprises sensor elements along two mutually perpendicular axes and applies a traditional voltage sense concept;

Fig. 17 is a schematic view of a variable inductance type radial position sensing system of the prior art with a bridge arrangement of element sensors which comprises sensor elements along one axis and applies a traditional voltage sense concept; and

Fig. 18 is a schematic view of an electrical model of the known variable inductance type radial position sensing system of Fig. 17.

## DESCRIPTION OF THE PREFERRED EMBODIMENTS

The present invention will be described in connection with preferred embodiments which are given by way of examples.

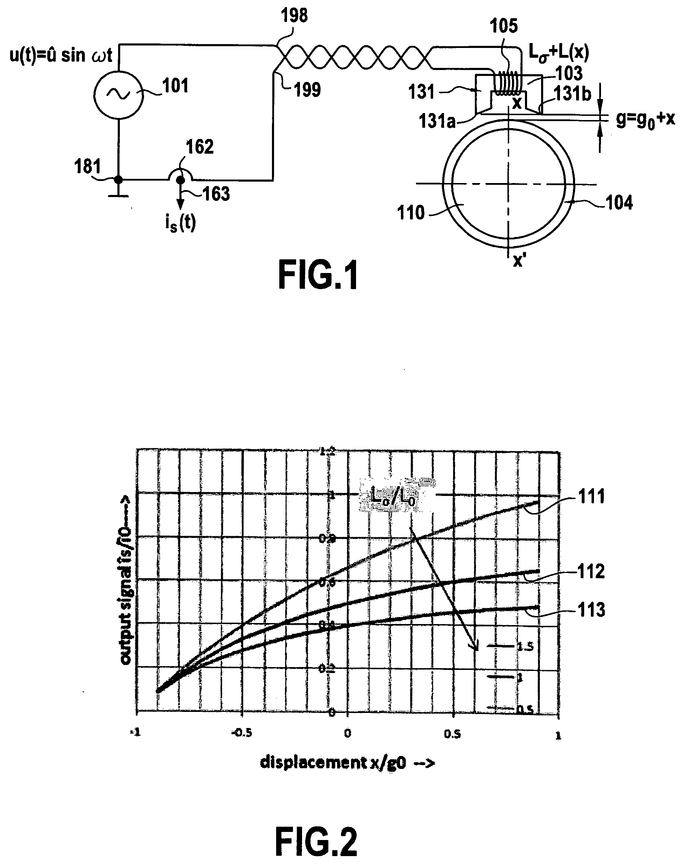

Fig. 1 shows a typical arrangement of a variable inductance type position sensor system comprising a rotor target 104 of ferromagnetic material constituting a ring fixed on a rotary shaft 110 and a stationary magnetic circuit 103 which is placed outside the rotor target 104. The stationary magnetic circuit 103 comprises a sensing element 131 located along a predefined first axis X-X' in front of the rotor target 104 while leaving an air gap between the sensing element 131 and the rotor target 104. The sensing element 131 comprises a portion of the stationary magnetic circuit 103 and defines two pole pieces 131a, 131b turned toward the rotor target 104. The sensing element 131 thus comprises a generally U-shaped magnetic circuit and further comprises at least one induction coil 105 which is wound around the portion of the stationary magnetic circuit between the pole pieces 131a, 131b as shown in Fig. 1. However alternatively the sensing element 131 may comprise two series-connected induction coils which are wound around the pole pieces 131a, 131b of the U-shaped magnetic circuit of the sensing element 131. In the embodiment of Fig. 1, for the sake of clarity only one induction coil 105 is used.

A first end of the induction coil 105 of the sensing element 131 is connected to a first end 198 of an AC voltage source 101. A second end of the induction coil 105 of the sensing element 131 is connected to a connection point 199, which is connected to a second end 181 of the AC voltage source 101.

The second end 181 of the AC voltage source 101 is connected to a reference voltage which is preferably the ground. A detector device 162 is interposed between the connection point 199 and the second end 181 of the AC voltage source 101 in order to deliver on a line 163 information about the magnitude of the current flowing between the connection point 199 and the second end 181 of the AC voltage source 101. This information represents the value of a modification x to the width of the air gap that presents a predetermined nominal value go along the first axis X-X'.

The rotor target 104 may be made of ferrite or may be constituted by a ferromagnetic lamination or by a stack of ferromagnetic laminations.

Similarly the stationary magnetic circuit 103 may be made of ferrite or may be constituted by a stack of ferromagnetic laminations.

In Fig. 1, $u(t) = u * \sin\omega t$ designates the sinusoidal excitation voltage of the AC voltage source 101.

The current sensed by the detector device 162 is $i_s(t)$.

The sensor air gap g is defined as $g = g_0 + x$, where $g_0$ is the nominal sensor air gap and x is the rotor displacement with respect to the position corresponding to the nominal sensor air gap.

The inductance of the coil 105 of the sensing element 131 is defined as the sum of a leakage inductance $L_\sigma$ and of an inductance $L(x)$ which is defined as a function of the nominal sensor air gap go, of the rotor displacement x and of the inductance $L_0$ at nominal gap (x=0).

In Fig. 2 three curves represent the output signal is (divided by the nominal output $i_0$ when the displacement x=0) of the detector device 162 as a function of the displacement x (divided by the nominal sensor gap $g_0$) for three different values of the ratio $L_\sigma/L_0$. The curves 111, 112 and 113 thus respectively correspond to the values 1.5, 1 and 0.5 of the ratio $L_\sigma/L_0$.

According to the invention the current flowing between the connection point 199 and the second end 181 of the AC voltage source 101 is sensed by the detector device 162, whereas according to the prior art illustrated in Figs. 16 to 18 a voltage is sensed.

Due to the current sensing concept a simple variable inductance type single element sensor 131 may be easily designed to build a radial position detection system.

If we consider Fig. 2, it may be seen that the sensed current amplitude is not a linear function of the displacement x and that the leakage inductance has a strong influence on the offset, sensitivity and linearity. The output signal of the detector device may be converted into a digital signal which is then applied to a digital processor which will compensate the offset and will linearize the sensor.

In any case the embodiment of Fig. 1 avoids the need for shielded cables and implies a lower power consumption, which is an improvement with respect to the prior art sensing devices.

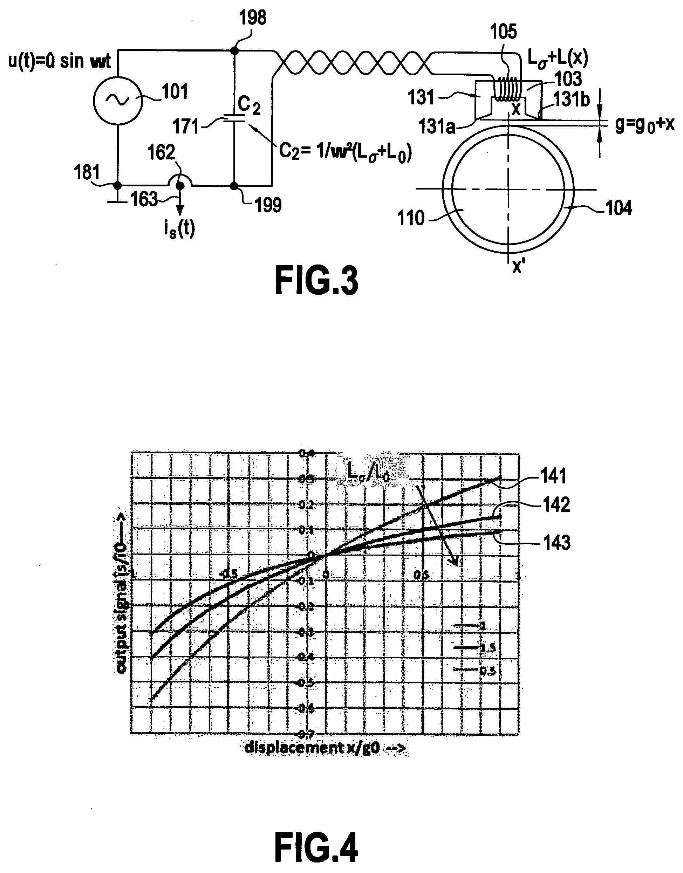

According to an embodiment as shown in Fig. 3, the variable inductance type position sensor system comprises a capacitor $C_2$ 171 connected in parallel between the first end 198 of the first AC voltage source 101 and the first connection point 199. In this case the inductive sensor current (90° phase lag) at nominal sensor gap is compensated by the constant capacitive current of capacitor $C_2$ 171 (90° phase lead).

This goal is achieved for

$$This\ goal\ is\ achieved\ for\ C_2 = 1/\omega^2(L_\sigma + L_0).$$

In nominal position (x=0) the oscillator current and the sensed current are zero.

For small displacements around zero, the system in Fig. 3 has already a quite good linearity as may be seen in Fig. 4 which shows three curves representing the output signal is (divided by the nominal output $i_0$ when the displacement x=0) of the detector device 162 as a function of the displacement x (divided by the nominal sensor gap $g_0$) for three different values of the ratio $L_\sigma/L_0$. The curves 141, 142 and 143 thus respectively correspond to the values 1.5, 1 and 0.5 of the ratio $L_\sigma/L_0$.

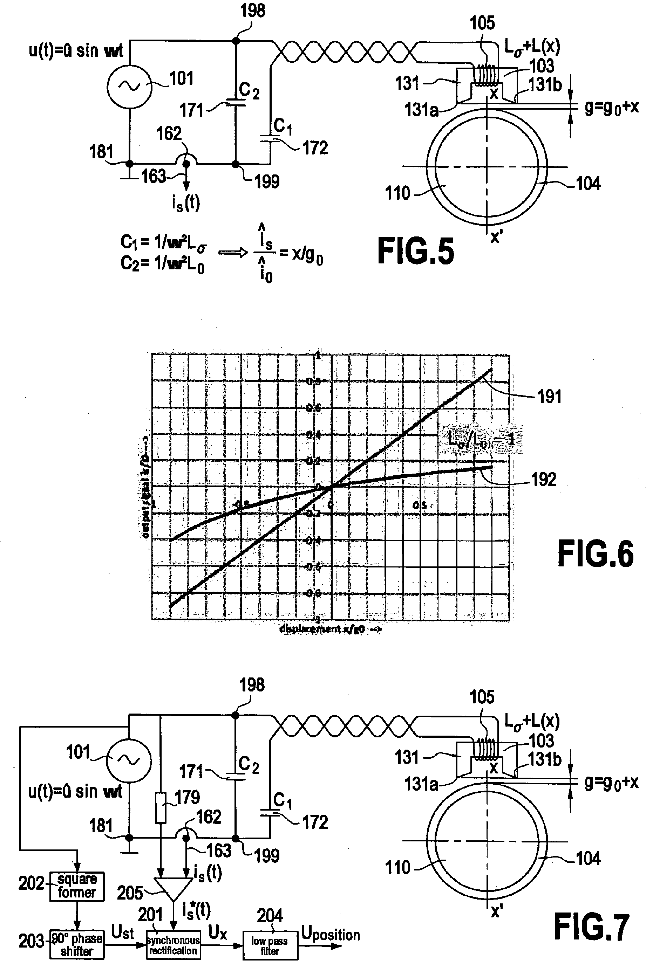

The embodiment of Fig. 5 aims at still improving the linearity of the system even for large displacements. The variable inductance type position sensor system according to Fig. 5 comprises a capacitor $C_1$ 172 connected in series between the first connection point 199 and the second end of the at least one induction coil 105 of the first sensing element 131. The capacitance of the capacitor $C_1$ 172 is chosen so that the impedance at excitation frequency matches the impedance of the leakage inductance (at excitation frequency).

The selection of the values for capacitors $C_1$ and $C_2$ has to be done according to the sensor characteristics: the value for $C_1$ is determined by the leakage inductance of the sensor at excitation frequency as follows:

$$C_1 = 1/\omega^2 L_\sigma.$$

The value of $C_2$ is determined by the inductance $L_0$ as follows:

$$C_2 = 1/\omega^2 L_0.$$

$L_0$ corresponds to the sensor inductance at nominal gap minus the leakage inductance.

If the values for $C_1$ and $C_2$ are selected properly, the single element sensor concept as sketched in Fig. 5 has a perfect linearity over an operating range of up to +/-90% of the nominal sensor gap.

As shown in the graph of fig.6 the sensitivity of the system with capacitor $C_1$ (curve 191) is increased by a factor of about 4 (12dB), compared to the system without capacitor $C_1$ (curve 192).

The curves 191 and 192 represent the output signal is (divided by the nominal output $i_0$ when the displacement

x=0) of the detector device 162 as a function of the displacement x (divided by the nominal sensor gap $g_0$) respectively for the system of Fig. 5 including capacitors 171 and 172 and for the system of Fig. 4 including only capacitor 171.

The capacitors 171 and 172 can be located on the electronic circuitry side as well as close to the sensing element 131 or inside the sensing element housing.

Arranging the capacitors 171 and 172 close to the sensing element 131 leads to a simple, compact and linear sensing module.

The number of components and the system cost is reduced to a minimum. The required electronic circuitry is very simple. Only one simple reference oscillator is necessary and the output voltage of the reference oscillator can have a large DC offset, because capacitor $C_1$ 172 "cuts" the DC path.

In addition broken wire detection can be implemented easily: if the sensor wire is broken (open circuit), the sensed current becomes capacitive with high amplitude. This situation can be detected by the electronic circuitry without additional effort.

The immunity against electrical noise is good and in general there is no need for any special, shielded wires.

As shown in Fig. 7, the variable inductance type position sensor system according to a preferred embodiment of the invention may comprise a demodulation circuit comprising a square former 202 connected to the first end 198 of the first AC voltage source 101, a 90° phase shifter 203, a synchronous rectification circuit 201 connected to the detector device 162 and a low pass filter 204. Optionally a resistor 179 may be connected to the first end 198 of the first AC voltage source 101. The other end of this resistor 179 and the line 163 connected to the detector device 162 are applied to an operational amplifier 205 whose output is connected to the synchronous rectification circuit 201. This resistor 179 compensates the effect of iron losses in the magnetic sensing circuit. The position information outputted by the low pass filter 204 is then converted to digital information through an analog/digital converter not shown in Fig. 7.

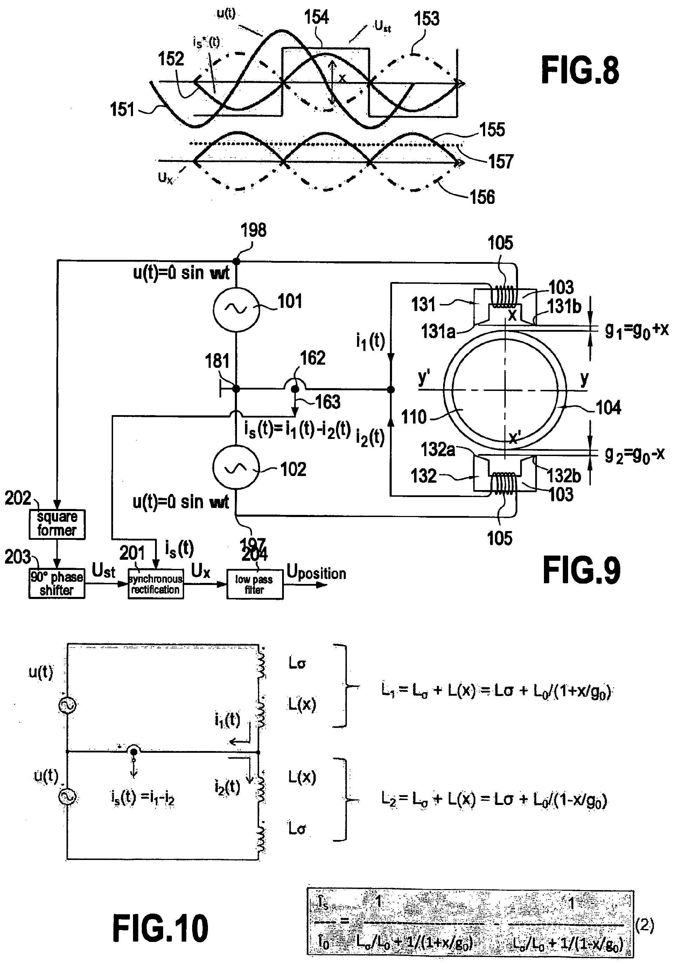

The signals processed in the arrangement of Fig. 7 are illustrated in Fig. 8 which shows in particular the AC signal u(t) 151 outputted by the first AC voltage source 101; the sensed current $i_s(t)$ 152 outputted by the detector device 162; the signal $u_{st}$ outputted by the square former 202 and the 90° phase shifter 203; the rectified signal $u_x$ 155 outputted by the synchronous rectification circuit 201 and the signal $u_{position}$ 157 outputted by the low pass filter 204.

In Fig. 8, the curves 153 and 156 in dotted lines correspond to a negative displacement x<0, whereas curves 152 and 155 respectively correspond to a positive displacement x>0.

Instead of the demodulation circuit of Fig. 7, as an alternative embodiment, the sensed current amplitude $i_s(t)$ may be directly sampled by means of a digital signal processor.

There are no practical restrictions in the implementation of the invention and the features of the invention described above can be applied on all types of variable inductance type inductive sensors whatever their size.

As a practical example a current sense system according to the invention may be applied to a practical setup with the following characteristics: u = 10 $V_{peak}$, f=20 kHz, $L_\sigma$= 280 uH, $L_0$ = 280$\mu$H, $g_0$=500$\mu$m.

In this case the required capacitors values are about 220 nF.

A variable inductance type position sensor system according to another embodiment of the invention is illustrated in Fig. 9. In addition to the elements shown in the embodiment of Fig. 1, the variable inductance type position sensor system of Fig. 9 includes the following features:

A portion of the stationary magnetic circuit 103 defines two pole pieces 132a, 132b of a second sensing element 132 turned toward the rotor target 104. The second sensing element 132, like the first sensing element 131, thus comprises a generally U-shaped magnetic circuit and further comprises at least one induction coil 105 which is wound around the portion of the stationary magnetic circuit between the pole pieces 132a, 132b as shown in Fig. 9.

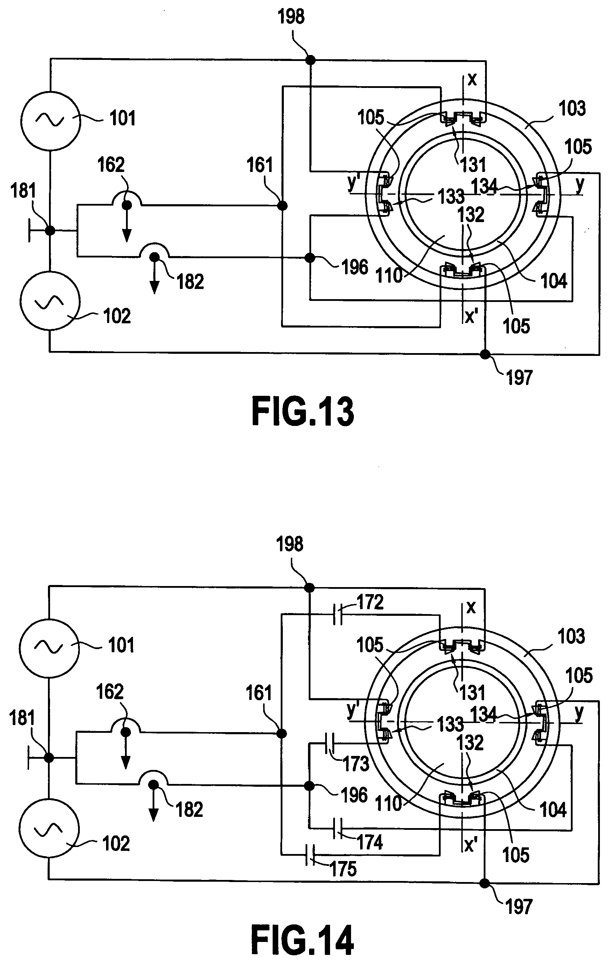

However alternatively the sensing elements 131, 132 may comprise two series-connected induction coils which are wound around the pole pieces 131a, 131b respectively 132a, 132b of the U-shaped magnetic circuit of the sensing elements 131, 132. Such feature has been represented in the embodiments of Figs. 13 and 14 which will be described later. In the embodiment of Fig. 9, for the sake of clarity, only one induction coil 105 is used for each sensing element 131, 132.

The second sensing element 132 is located along the predefined first axis X-X' on opposite side of the rotor target 104 with respect to the first sensing element 131, while leaving an air gap between the second sensing element 132 and the rotor target 104.

A first end of the induction coil 105 of the second sensing element 132 is connected to a first end 197 of a second AC voltage source 102. A second end of the induction coil 105 of the second sensing element 132 is connected to the first connection point which constitutes a first common connection point 161 and which is connected to a second end of the second AC voltage source 102 which constitutes a second common connection point 181 which is common to the second end of the first AC voltage source 101 and is connected to the reference voltage which is preferably the ground.

In the current sense concept applied to a one-axis bridge arrangement illustrated in Fig. 9, the first and second AC voltage sources 101, 102 are constituted by a split reference voltage oscillator having a fixed frequency and amplitude and generating in the coils 105 of the first and second sensing elements 131, 132 sinusoidal carriers of opposite signs with respect to the signal ground at connection point 181.

The typical frequency of the split reference voltage oscillator is several kHz and the amplitude is in the range from 2 to 50V (depending on the size of the sensor and the application). The centre point 161 of the bridge formed by the inductive sensor elements 131 and 132 is directly connected to signal ground at connection point 181. The AC current flowing from the centre point 161 of the bridge to signal ground at connection point 181 is measured by the detector device 162.

If the rotor is in the centre position (x=0), the measured current is zero. This is the normal situation if the rotor is centred in the bearings which are preferably active magnetic bearings.

If the rotor is moving in the positive direction of x (x>0), the amplitude of current $i_1$ increases and the amplitude of current $i_2$ decreases and the resulting ground current amplitude $i_s=i_1-i_2$ also increases.

If the rotor is moving in the negative direction of x (x<0), the amplitude of current $i_1$ decreases and the amplitude of current $i_2$ increases and the resulting ground current amplitude increases with a negative sign.

So the rotor displacement x modulates the amplitude of the ground current which is sensed by the detector device 162. In this current sense concept, there is always a constant phase lag of 90° between the excitation voltage u(t) and the measured current $i_s(t)$ (see Fig. 8). This has to be taken into account in the demodulation circuitry.

The demodulation circuitry is synchronized by the excitation voltage. A typical characteristic of the current sense mode is that the control signal $u_{st}$ is 90° phase delayed with respect to the reference oscillator voltage, as shown in Fig.8.

Like in the embodiment of Fig. 7, the variable inductance type position sensor system according to the embodiment of Fig. 9 preferably comprises a demodulation circuit comprising a square former 202 connected to the first end 198 of the first AC voltage source 101, a 90° phase shifter 203, a synchronous rectification circuit 201 connected to the detector device 162 and a low pass filter 204.

The electrical model for the arrangement in Fig. 9 is given in Fig. 10. Each inductive sensor element is represented by a serial connection of two inductances.

$L_\sigma$ is the leakage inductance which does not change when the sensor gap is changing.

The inductance values $L_1(x)=L_0* 1/(1+x/g_0)$ and $L_2= Lo* 1/(1-x/g_0)$ depend on the displacement x as shown.

$L_0$ corresponds to the value of the variable part of the inductance when the displacement x is zero. In this case the sensor gap has the nominal value $g_0$.

In certain cases, the losses in the sensor laminations are significant. If necessary these losses could be represented by a resistance in parallel to L(x). However for a bridge arrangement it is not necessary to consider these losses, the simple model in Fig. 10 describes the real behaviour quite well.

Equation (2) in Fig. 10 has been derived from the model. It quantifies the output signal as a function of the rotor displacement x.

Fig. 11 shows the corresponding sensitivity/linearity graph compared to a similar graph illustrated in Fig. 12 for a traditional voltage sensing. Both graphs have been generated using the same electrical sensor model.

The graphs show the output signal (divided by the excitation amplitude) as a function of the displacement (divided by the nominal sensor gap $g_0$).

The maximum displacement 0.9 corresponds to 90% of the nominal sensor gap.

The graphs in Figs. 11 and 12 show clearly that the current sensing concept has a much better linearity, especially for a large displacement than the voltage sensing concept of the prior art.

In Fig. 11 three curves represent the output signal is (divided by the nominal output $i_0$ when the displacement x=0) of the detector device 162 as a function of the displacement x (divided by the nominal sensor gap go) for three different values of the ratio $L_\sigma/L_0$. The curves 121, 122 and 123 thus respectively correspond to the values 1.5, 1 and 0.5 of the ratio $L_\sigma/L_0$.

In Fig. 12 concerning a voltage sensing concept of the prior art, three curves represent the voltage output signal $u_s$ (divided by the nominal output $u_0$ when the displacement x=0) of a detector device (not shown in Figs. 16 and 17) as a function of the displacement x (divided by the nominal sensor gap $g_0$) for three different values of the ratio $L_\sigma/L_0$. The curves 21, 22 and 23 thus respectively correspond to the values 0.5, 1 and 1.5 of the ratio $L_\sigma/L_0$.

In addition to the improved linearity, the current sense concept according to the invention solves other potential problems. Thus the fact that the "sensing wire" is connected to ground with zero impedance (and not floating) increases the immunity against electrical noise coupled to this wire. This is comparable to the signal/noise ratio difference between a current loop and voltage loop in an industrial environment. For a practical system, this is a very important advantage, especially when the cable length between sensor and electronics are longer (more than 10 m). So in practice (and for comparable noise performances) it is possible to decrease the excitation voltage amplitude by a factor and to avoid any cable shielding. A lower excitation voltage amplitude decrease cost and power losses. Not shielded cables also reduce cost and the connectivity is much simpler.

According to another embodiment of the invention illustrated in Fig. 13, the stationary magnetic circuit (103) further defines third and fourth sensing elements 133, 134 located along a predefined second axis Y-Y' which is perpendicular to the first axis X-X', on opposite sides of the rotor target 104 while leaving an air gap between the third and fourth sensing elements 133, 134 and the rotor target 104. The third and fourth sensing elements 133, 134 each receive at least one induction coil 105. A first end of the at least one induction coil 105 of the third sensing element 133 is connected to a first end 198 of the first AC voltage source 101. A first end of the at least one induction coil 105 of the fourth sensing element 134 is connected to a first end 197 of a second AC voltage source 102 and second ends of the third and fourth sensing elements 133, 134 are connected to a third common connection point 196, which is connected to the second ends of the first and second AC voltage sources 101, 102 having themselves the second common connection point 181 which is connected to the reference voltage, which is preferably the ground. A second detector device 1882 is interposed between the second and third common connection points 181, 196 in order to deliver on a line information about the magnitude of the current flowing between the second and third connection points 181, 196. The information represents the value of a modification to the width of the air gap that presents a predetermined nominal value $g_0$ along the second axis Y-Y'.

In Fig. 13 for illustration purposes each sensing element 131 to 134 has a set of two serially-connected coils 105 wound around the poles of a U-shaped portion of the stationary magnetic circuit 103 defining a magnetic circuit of the corresponding sensing element.

Fig. 14 illustrates an embodiment of the invention which is similar to the system of Fig. 13, but which further comprises capacitors 172 to 175, which are similar to capacitor 172 of Figs. 5 and 7, and are connected in series with the coils 105 of the sensing elements 131 to 134 respectively. Capacitors 172 to 175 provide a linearizing effect.

As shown in the graph of Fig. 15 the sensitivity of the system of Fig. 13 with capacitors 172 to 175 (curve 195) is increased by a factor of about 4 (12dB), compared to the system of Fig. 14 without capacitors 172 to 175 (curve 194), for a ratio $L_\sigma/L_0=1$.

The curves 195 and 194 thus represent the output signal is (divided by the nominal output $i_0$ when the displacement x=0) of the detector device 162 as a function of the displacement x (divided by the nominal sensor gap $g_0$) respectively for the system of Fig. 14 including capacitors 172 to 175 and for the system of Fig. 13 including no capacitors 172 to 175.

The embodiment of Fig. 14 improves the sensitivity and the linearity for large displacements is perfect.

Generally speaking, the invention provides a simplification, increases performance and reduces power losses and cost.

The invention also relates to a variable inductance type method for sensing the radial position of a rotor target 104 of ferromagnetic material constituting a ring fixed on a rotary shaft 110 with respect to a stationary magnetic circuit 103 which is placed around said rotor target 104. Such method as illustrated in Fig. 1 comprises the steps of arranging in the stationary magnetic circuit 103 at least a first sensing element 131 located along a predefined first axis X-X' in front of the rotor target 104 while leaving an air gap between the first sensing element 131 and the rotor target 104, and providing the first sensing element 131 with at least one induction coil 105. The method is characterized in that it further comprises the steps of connecting a first end of the at least one induction coil 105 of the first sensing element 131 to a first end 198 of a first AC voltage source 101, connecting a second end of the at least one induction coil 105 of the first sensing element 131 to a first connection point 199, connecting the first connection point 199 to a second end 181 of the first AC voltage source 101, connecting the second end 181 of the first AC voltage source 101 to a reference voltage and interposing a detector device 162 between the first connection point 199 and the second end 181 of the first AC voltage source 101 in order to deliver on a line 163 information about the magnitude of the current flowing between the first connection point 199 and the second end 181 of the first AC voltage source 101. The information represents the value of a modification x to the width of the air gap that presents a predetermined nominal value $g_0$ along the first axis X-X'.

As shown in Fig. 3, the method may further comprise the step of connecting a capacitor $C_2$ 171 in parallel between the first end 198 of the first AC voltage source 101 and the first connection point 199.

As shown in Figs. 5 and 7, the variable inductance type method according to the invention may further comprise the step of connecting a capacitor $C_1$ 172 in series between the first connection point 199 and the second end of the at least one induction coil 105 of the first sensing element 131.

The method also applies similarly for the embodiments of Figs. 9 and 13, 14.

The invention which is based on a current sensing method may be applied to all types of variable inductance type sensor elements. The sensing method is independent of the way the shaft or rotor is suspended, but it is particularly suitable for rotors suspended in levitation by active magnetic bearings.

Although preferred embodiments have been shown and described, it should be understood that any changes and modifications may be made therein without departing from the scope of the invention as defined in the appended claims. Thus the features of the different embodiments may be combined.

**Claims**

1.  A variable inductance type radial position sensor system comprising a rotor target (104) of ferromagnetic material constituting a ring fixed on a rotary shaft (110) and a stationary magnetic circuit (103) which is placed around said rotor target (104), said stationary magnetic circuit (103) comprising at least a first sensing element (131) located along a predefined first axis X-X' perpendicular to the axis of the rotary shaft (110) perpendicular to the axis of the rotary shaft (110) in front of the rotor target (104) while leaving an air gap between said first sensing element (131) and the rotor target (104), said first sensing element (131) receiving at least one induction coil (105), **characterized in that** a first end of said at least one induction coil (105) of said first sensing element (131) is connected to a first end (198) of a first AC voltage source (101), and a second end of said at least one induction coil (105) of said first sensing element (131) is connected to a first connection point (199), which is connected to a second end (181) of said first AC voltage source (101), said second end (181) of said first AC voltage source (101) being connected to a reference voltage and a detector device (162) being interposed between said first connection point (199) and said second end (181) of said first AC voltage source (101) in order to deliver information about the magnitude of the current flowing between said first connection point (199) and said second end (181) of said first AC voltage source (101), said information representing the value of a modification x to the width of said air gap that presents a predetermined nominal value $g_0$ along said first axis X-X', and wherein it comprises a capacitor C1 (172) connected in series between said first connection point (199) and said second end of said at least one induction coil (105) of said first sensing element (131).

2.  The variable inductance type radial position sensor system according to claim 1, wherein said rotor target (104) is made of ferrite.

3.  The variable inductance type radial position sensor system according to claim 1, wherein said rotor target (104) is constituted by a ferromagnetic lamination or by a stack of ferromagnetic laminations.

4.  The variable inductance type radial position sensor system according to claim 1, wherein said stationary magnetic circuit (103) is made of ferrite or is constituted by a stack of ferromagnetic laminations.

5.  The variable inductance type radial position sensor system according to claim 1, wherein said reference voltage is equal to 0 volt.

6.  The variable inductance type radial position sensor system according to any one of claims 1 to 5, wherein it comprises a demodulation circuit comprising a square former (202) connected to said first end (198) of said first AC voltage source (101), a 90° phase shifter (203), a synchronous rectification circuit (201) connected to said detector device (162) and a low pass filter (204).

7.  The variable inductance type radial position sensor system according to any one of claims 1 to 6, wherein it comprises a capacitor $C_2$ (171) connected in parallel between said first end (198) of said first AC voltage source (101) and said first connection point (199).

8.  The variable inductance type radial position sensor system according to any one of claims 1 to 7, wherein said stationary magnetic circuit (103) comprises a second sensing element (132) located along said predefined first axis X-X' on opposite side of the rotor target (104) with respect to said first sensing element (131) while leaving an air gap between said second sensing element (132) and the rotor target (104), said second sensing element (132) receiving at least one induction coil (105), a first end of said at least one induction coil (105) of said second sensing element (132) being connected to a first end (197) of a second AC voltage source (102), and a second end of said at least one induction coil (105) of said second sensing element (132) being connected to said first connection point which constitutes a first common connection point (161) and which is connected to a second end of said second AC voltage source (102) which constitutes a second common connection point (181) which is common to said second end of said first AC voltage source (101) being connected to said reference voltage.

9.  The variable inductance type radial position sensor system according to claim 8, wherein said first and second AC voltage sources (101, 102) are constituted by a split reference voltage oscillator having a fixed frequency and amplitude and generating a sinusoidal carrier of opposite signs.

10. The variable inductance type radial position sensor system according to claim 8 or claim 9, wherein said stationary magnetic circuit (103) further comprises third and fourth sensing elements (133, 134) located along a predefined second axis Y-Y' which is perpendicular to said first axis X-X', on opposite sides of the rotor target (104) while leaving an air gap between said third and fourth sensing elements (133, 134) and the rotor target (104), said third and fourth sensing elements (133, 134) each receiving at least one induction coil (105), a first end of said at least one induction coil (105) of said third sensing element (133) being connected to a first end (198) of said first AC voltage source (101), a first end of said at least one induction coil (105) of said fourth sensing element (134) being connected to a first end (197) of a second AC voltage source (102) and second ends of said third and fourth sensing elements (133, 134) being connected to a third common connection point (196), which is connected to said second ends of said first and second AC voltage sources (101, 102) having themselves said second common connection point (181) which is connected to said reference voltage, a second detector device (182) being interposed between said second and third common connection points (181, 196) in order to deliver information about the magnitude of the current flowing between said second and third connection points (181, 196), said information representing the value of a modification to the width of said air gap that presents a predetermined nominal value $g_0$ along said second axis Y-Y'.

11. A variable inductance type method for sensing the radial position of a rotor target (104) of ferromagnetic material constituting a ring fixed on a rotary shaft (110) with respect to a stationary magnetic circuit (103) which is placed around said rotor target (104), said method comprising the steps of arranging in said stationary magnetic circuit (103) at least a first sensing element (131) located along a predefined first axis X-X' perpendicular to the axis of the rotary shaft (110) in front of the rotor target (104) while leaving an air gap between said first sensing element (131) and the rotor target (104), and providing said first sensing element (131) with at least one induction coil (105), **characterized in that** it further comprises the steps of connecting a first end of said at least one induction coil (105) of said first sensing element (131) to a first end (198) of a first AC voltage source (101), connecting a second end of said at least one induction coil (105) of said first sensing element (131) to a first connection point (199), connecting said first connection point (199) to a second end (181) of said first AC voltage source (101), connecting said second end (181) of said first AC voltage source (101) to a reference voltage and interposing a detector device (162) between said first connection point (199) and said second end (181) of said first AC voltage source (101) in order to deliver information about the magnitude of the current flowing between said first connection point (199) and said second end (181) of said first AC voltage source (101), said information representing the value of a modification x to the width of said air gap that presents a predetermined nominal value $g_0$ along said first axis X-X' and wherein it further comprises the step of connecting a capacitor C1 (172) in series between said first connection point (199) and said second end of said at least one induction coil (105) of said first sensing element (131).

12. The variable inductance type method according to claim 11, wherein it further comprises the step of connecting a capacitor $C_2$ (171) in parallel between said first end (198) of said first AC voltage source (101) and said first connection point (199).

13. A rotary electrical machine or a radial magnetic bearing device, **characterized in that** it comprises a variable inductance type radial position sensor system according to any one of claims 1 to 10.

**Patentansprüche**

1. Radialpositionssensorsystem mit variabler Induktivität, das ein Rotorziel (104) aus ferromagnetischen Material, das einen Ring bildet, der an einer Drehwelle (110) befestigt ist, und einen feststehenden magnetischen Kreis (103) aufweist, der um das Rotorziel (104) angeordnet ist, wobei der feststehende magnetische Kreis (103) mindestens ein erstes Abtastelement (131) aufweist, das längs einer vordefinierten, zur Achse der Drehwelle (110) senkrechten ersten Achse X-X' vor dem Rotorziel (104) angeordnet ist, während ein Luftspalt zwischen dem ersten Abtastelement (131) und dem Rotorziel (104) gelassen wird, wobei das erste Abtastelement (131) mindestens eine Induktionsspule (105) aufnimmt, **dadurch gekennzeichnet, dass** ein erstes Ende der mindestens einen Induktionsspule (105) des ersten Abtastelements (131) mit einem ersten Ende (198) einer ersten Wechselstrom-Spannungsquelle (101) verbunden ist, und ein zweites Ende der mindestens einen Induktionsspule (105) des ersten Abtastelements (131) mit einem ersten Verbindungspunkt (199) verbunden ist, der mit einem zweiten Ende (181) der ersten Wechselstrom-Spannungsquelle (101) verbunden ist, wobei das zweite Ende (181) der ersten Wechselstrom-Spannungsquelle (101) mit einer Referenzspannung verbunden ist und wobei eine Detektorvorrichtung (162) zwischen dem ersten Verbindungspunkt (199) und dem zweiten Ende (181) der ersten Wechselstrom-Spannungsquelle (101) angeordnet ist, um Informationen über die Größe des Stroms zu liefern, der zwischen dem ersten Verbindungspunkt (199) und dem zweiten Ende (181) der ersten Wechselstrom-Spannungsquelle (101) fließt, wobei die Informationen den Wert einer Modifikation x an der Breite des Luftspalts repräsentieren, die einen vorgegebenen Nennwert $g_0$ längs der ersten Achse X-X' aufweist, und wobei es einen Kondensator C1 (172) aufweist, der zwischen dem ersten Verbindungspunkt (199) und dem zweiten Ende der mindestens einen Induktionsspule (105) des ersten Abtastelements (131) in Reihe geschaltet ist.

2. Radialpositionssensorsystem mit variabler Induktivität nach Anspruch 1, wobei das Rotorziel (104) aus Ferrit besteht.

3. Radialpositionssensorsystem mit variabler Induktivität nach Anspruch 1, wobei das Rotorziel (104) durch eine ferromagnetische Schichtung oder durch einen Stapel von ferromagnetischen Schichtungen gebildet wird.

4. Radialpositionssensorsystem mit variabler Induktivität nach Anspruch 1, wobei der feststehende magnetische Kreis (103) aus Ferrit besteht oder durch einen Stapel von ferromagnetischen Schichtungen gebildet wird.

5. Radialpositionssensorsystem mit variabler Induktivität nach Anspruch 1, wobei die Referenzspannung gleich 0 Volt ist.

6. Radialpositionssensorsystem mit variabler Induktivität nach einem der Ansprüche 1 bis 5, wobei es eine Demodulationsschaltung aufweist, die einen Quadratbildner (202), der mit dem ersten Ende (198) der ersten Wechselstrom-Spannungsquelle (101) verbunden ist, einen 90°-Phasenschieber (203), eine Synchrongleichrichterschaltung (201), die mit der Detektorvorrichtung (162) verbunden ist, und einen Tiefpassfilter (204) aufweist.

7. Radialpositionssensorsystem mit variabler Induktivität nach einem der Ansprüche 1 bis 6, wobei es einen Kondensator C2 (171) aufweist, der zwischen dem ersten Ende (198) der ersten WechselstromSpannungsquelle (101) und dem ersten Verbindungspunkt (199) parallel geschaltet ist.

8. Radialpositionssensorsystem mit variabler Induktivität nach einem der Ansprüche 1 bis 7, wobei der feststehende magnetische Kreis (103) ein zweites Abtastelement (132) aufweist, das längs der vordefinierten ersten Achse X-X' bezüglich des ersten Abtastelements (131) auf der gegenüberliegenden Seite des Rotorziels (104) angeordnet ist, während ein Luftspalt zwischen dem zweiten Abtastelement (132) und dem Rotorziel (104) gelassen wird, wobei das zweite Abtastelement (132) mindestens eine Induktionsspule (105) aufnimmt, wobei ein erstes Ende der mindestens einen Induktionsspule (105) des zweiten Abtastelements (132) mit einem ersten Ende (197) einer zweiten Wechselstrom-Spannungsquelle (102) verbunden ist, und wobei ein zweites Ende der mindestens einen Induktionsspule (105) des zweiten Abtastelements (132) mit dem ersten Verbindungspunkt verbunden ist, der einen ersten gemeinsamen Verbindungspunkt (161) bildet und der mit einem zweiten Ende der zweiten WechselstromSpannungsquelle (102) verbunden ist, was einen zweiten gemeinsamen Verbindungspunkt (181) bildet, der mit dem zweiten Ende der ersten Wechselstrom-Spannungsquelle (101) gemeinsam ist, die mit der Referenzspannung verbunden ist.

9. Radialpositionssensorsystem mit variabler Induktivität nach Anspruch 8, wobei die erste und zweite Wechselstrom-Spannungsquelle (101, 102) durch einen geteilten Referenzspannungsoszillator gebildet werden, der eine feste Frequenz und Amplitude aufweist und einen sinusförmigen Träger mit entgegengesetzten Vorzeichen erzeugt.

10. Radialpositionssensorsystem mit variabler Induktivität nach Anspruch 8 oder 9, wobei der feststehende magnetische Kreis (103) ferner ein drittes und viertes Abtastelement (133, 134) aufweist, die längs einer vordefinierten zweiten Achse Y-Y', die zur ersten Achse X-X' senkrecht ist, auf entgegengesetzten Seiten des Rotorziels (104) angeordnet sind, während ein Luftspalt zwischen dem dritten und dem vierten Abtastelement (133, 134) und dem Rotorziel (104) gelassen wird, wobei das dritte und vierte Abtastelement (133, 134) jeweils mindestens eine Induktionsspule (105) aufnehmen, wobei ein erstes Ende der mindestens einen Induktionsspule (105) des dritten Abtastelements (133) mit einem ersten Ende (198) der ersten Wechselstrom-Spannungsquelle (101) verbunden ist, wobei ein erstes Ende der mindestens einen Induktionsspule (105) des vierten Abtastelements (134) mit einem ersten Ende (197) einer zweiten Wechselstrom-Spannungsquelle (102) verbunden ist und zweite Enden des dritten und vierten Abtastelements (133, 134) mit einem dritten gemeinsamen Verbindungspunkt (196) verbunden sind, der mit den zweiten Enden der ersten und zweiten WechselstromSpannungsquelle (101, 102) verbunden ist, die selbst den zweiten gemeinsamen Verbindungspunkt (181) aufweisen, der mit der Referenzspannung verbunden ist, wobei eine zweite Detektorvorrichtung (182) zwischen dem zweiten und dritten gemeinsamen Verbindungspunkt (181, 196) geschaltet ist, um Informationen über die Größe des Stroms zu liefern, der zwischen dem zweiten und dritten Verbindungspunkt (181, 196) fließt, wobei die Informationen den Wert einer Modifikation an der Breite des Luftspalts repräsentieren, die einen vorgegebenen Nennwert $g_0$ längs der zweiten Achse Y-Y' aufweist.

11. Verfahren mit variabler Induktivität zum Abtasten der Radialposition eines Rotorziels (104) aus ferromagnetischem Material, das einen Ring bildet, der an einer Drehwelle (110) befestigt ist, bezüglich eines feststehenden magnetischen Kreises (103), der um das Rotorziel (104) angeordnet ist, wobei das Verfahren die folgenden Schritte aufweist: Anordnen im feststehenden magnetischen Kreis (103) mindestens eines ersten Abtastelements (131), das längs einer vordefinierten, zur Achse der Drehwelle (110) senkrechten ersten Achse X-X' vor dem Rotorziel (104) angeordnet ist, während ein Luftspalt zwischen dem ersten Abtastelement (131) und dem Rotorziel (104) gelassen wird, und Versehen des ersten Abtastelements (131) mit mindestens einer Induktionsspule (105), **dadurch gekennzeichnet, dass** es ferner die folgenden Schritte aufweist: Verbinden eines ersten Endes der mindestens einen Induktionsspule (105) des ersten Abtastelements (131) mit einem ersten Ende (198) einer ersten Wechselstrom-Spannungsquelle (101), Verbinden eines zweiten Endes der mindestens einen Induktionsspule (105) des ersten Abtastelements (131) mit einem ersten Verbindungspunkt (199), Verbinden des ersten Verbindungspunkts (199) mit einem zweiten Ende (181) der ersten Wechselstrom-Spannungsquelle (101), Verbinden des zweiten Endes (181) der ersten Wechselstrom-Spannungsquelle (101) mit einer Referenzspannung und Anordnen einer Detektorvorrichtung (162) zwischen dem ersten Verbindungspunkt (199) und dem zweiten Ende (181) der ersten Wechselstrom-Spannungsquelle (101), um Informationen über die Größe des Stroms zu liefern, der zwischen dem ersten Verbindungspunkt (199) und dem zweiten Ende (181) der ersten Wechselstrom-Spannungsquelle (101) fließt, wobei die Informationen den Wert einer Modifikation x an der Breite des Luftspalts repräsentieren, die einen vorgegebenen Nennwert $g_0$ längs der ersten Achse X-X' aufweist, und wobei es ferner den Schritt des Schaltens eines Kondensators C1 (172) in Reihe zwischen dem ersten Verbindungspunkt (199) und dem zweiten Ende der mindestens einen Induktionsspule (105) des ersten Abtastelements (131) aufweist.

**12.** Verfahren mit variabler Induktivität nach Anspruch 11, wobei es ferner den Schritt des Schaltens eines Kondensators C2 (171) parallel zwischen dem ersten Ende (198) der ersten Wechselstrom-Spannungsquelle (101) und dem ersten Verbindungspunkt (199) aufweist.

**13.** Elektrische Rotationsmaschine oder magnetische Radiallagervorrichtung, **dadurch gekennzeichnet, dass** sie ein Radialpositionssensorsystem mit variabler Induktivität nach einem der Ansprüche 1 bis 10 aufweist.

**Revendications**

**1.** Système de détection de position radiale de type à inductance variable comprenant une cible rotor (104) en un matériau ferromagnétique constituant un anneau fixé sur un arbre rotatif (110) et un circuit magnétique immobile (103) qui est placé autour de ladite cible rotor (104), ledit circuit magnétique immobile (103) comprenant au moins un premier élément de détection (131) situé le long d'un premier axe prédéfini X-X perpendiculaire à l'axe de l'arbre rotatif (110) en avant de la cible rotor (104) tout en laissant un entrefer entre ledit premier élément de détection (131) et la cible rotor (104), ledit premier élément de détection (131) recevant au moins une bobine d'induction (105), **caractérisé en ce qu'**une première extrémité de ladite au moins une bobine d'induction (105) dudit premier élément de détection (131) est connectée à une première extrémité (198) d'une première source de tension alternative (101), et une deuxième extrémité de ladite au moins une bobine d'induction (105) dudit premier élément de détection (131) est connectée à un premier point de connexion (199), qui est connecté à une deuxième extrémité (181) de ladite première source de tension alternative (101), ladite deuxième extrémité (181) de ladite première source de tension alternative (101) étant connectée à une tension de référence et un dispositif détecteur (162) étant interposé entre ledit premier point de connexion (199) et ladite deuxième extrémité (181) de ladite première source de tension alternative (101) afin de fournir des informations sur la grandeur du courant s'écoulant entre ledit premier point de connexion (199) et ladite deuxième extrémité (181) de ladite première source de tension alternative (101), lesdites informations représentant la valeur d'une modification x apportée à la largeur dudit entrefer qui présente une valeur nominale prédéterminée $g_0$ le long dudit premier axe X-X', ce système comprenant un condensateur C1 (172) connecté en série entre ledit premier point de connexion (199) et ladite deuxième extrémité de ladite au moins une bobine d'induction (105) dudit premier élément de détection (131).

**2.** Système de détection de position radiale de type à inductance variable selon la revendication 1, dans lequel ladite cible rotor (104) est faite en ferrite.

**3.** Système de détection de position radiale de type à inductance variable selon la revendication 1, dans lequel ladite cible rotor (104) est constituée par une lamelle ferromagnétique ou par une pile de lamelles ferromagnétiques.

**4.** Système de détection de position radiale de type à inductance variable selon la revendication 1, dans lequel ledit circuit magnétique immobile (103) est fait en ferrite ou est constitué par une pile de lamelles ferromagnétiques.

**5.** Système de détection de position radiale de type à inductance variable selon la revendication 1, dans lequel ladite tension de référence est égale à 0 volt.

**6.** Système de détection de position radiale de type à inductance variable selon l'une quelconque des revendications 1 à 5, comprenant un circuit de démodulation comportant un conformateur carré (202) connecté à ladite première extrémité (198) de ladite première source de tension alternative (101), un déphaseur de 90° (203), un circuit de redressement synchrone (201) connecté audit dispositif détecteur (162) et un filtre passe-bas (204).

**7.** Système de détection de position radiale de type à inductance variable selon l'une quelconque des revendications 1 à 6, comprenant un condensateur $C_2$ (171) connecté en parallèle entre ladite première extrémité (198) de ladite première source de tension alternative (101) et ledit premier point de connexion (199).

**8.** Système de détection de position radiale de type à inductance variable selon l'une quelconque des revendications 1 à 7, dans lequel ledit circuit magnétique immobile (103) comprend un deuxième élément de détection (132) situé le long dudit premier axe prédéfini X-X' sur le côté opposé de la cible rotor (104) par rapport audit premier élément de détection (131) tout en laissant un entrefer entre ledit deuxième élément de détection (132) et la cible rotor (104), ledit deuxième élément de détection (132) recevant au moins une bobine d'induction (105), une première extrémité de ladite au moins une bobine d'induction (105) dudit deuxième élément de détection (132) étant connectée à une première extrémité (197) d'une deuxième source de tension alternative (102), et une deuxième extrémité de ladite au moins une bobine d'induction (105) dudit deuxième élément de connexion (132) étant connectée audit premier point de connexion qui constitue un premier point de connexion commun (161) et qui est connecté à une deuxième extrémité de ladite deuxième source de tension alternative (102) qui constitue un deuxième point de connexion commun (181) qui est commun à ladite deuxième extrémité de ladite première source de tension alternative (101) connectée à ladite tension de référence.

**9.** Système de détection de position radiale de type à inductance variable selon la revendication 8, dans lequel lesdites première et deuxième sources de tension alternative (101, 102) sont constituées par un oscillateur de tension de référence fendu ayant une fréquence et une amplitude fixes et générant une porteuse sinusoïdale de signes opposés.

**10.** Système de détection de position radiale de type à inductance variable selon la revendication 8 ou la revendication 9, dans lequel ledit circuit magnétique immobile (103) comprend en outre un troisième et un quatrième élément de détection (133, 134) situés le long d'un deuxième axe prédéfini Y-Y' qui est perpendiculaire audit premier axe X-X', sur les côtés opposés de la cible rotor (104) tout en laissant un entrefer entre lesdits troisième et quatrième éléments de détection (133, 134) et la cible rotor (104), lesdits troisième et quatrième éléments détection (133, 134) recevant chacun au moins une bobine d'induction (105), une première extrémité de ladite bobine d'induction (105) dudit troisième élément de détection (133) étant connectée à une première extrémité (198) de ladite première source de tension alternative (101), une première extrémité de ladite au moins une bobine d'induction (105) dudit quatrième élément de connexion (134) étant connectée à une première extrémité (197) d'une deuxième source de tension alternative (102) et les deuxièmes extrémités desdits troisième et quatrième éléments de détection (133, 134) étant connectées à un troisième point de connexion commun (196), qui est connecté auxdites deuxièmes extrémités desdites première et deuxième sources de tension alternative (101, 102) ayant elles-mêmes ledit deuxième point de connexion (181) qui est connecté à ladite tension de référence, un deuxième dispositif détecteur (182) étant interposé entre lesdits deuxième et troisièmes points de connexion (181, 196) afin de fournir des informations sur la grandeur du courant s'écoulant entre lesdits deuxième et troisième points de connexion (181, 196), lesdites informations représentant la valeur d'une modification apportée à la largeur dudit entrefer qui présente une valeur nominale prédéterminée $g_0$ le long dudit deuxième axe Y-Y'.

**11.** Procédé de type à inductance variable pour détecter la position radiale d'une cible rotor (104) en un matériau ferromagnétique constituant un anneau fixé sur un arbre rotatif (110) par rapport à un circuit magnétique immobile (103) qui est placé autour de ladite cible rotor (104), ledit procédé comprenant les étapes consistant à disposer dans ledit circuit magnétique immobile (103) au moins un premier élément de détection (131) situé le long d'un premier axe prédéfini X-X' perpendiculaire à l'axe de l'arbre rotatif (110) en avant de la cible rotor (104) tout en laissant un entrefer entre ledit premier élément de détection (131) et la cible rotor (104), et la fourniture audit premier élément de détection (131) d'au moins une bobine d'induction (105), **caractérisé en ce qu'**il comprend en outre les étapes consistant à connecter une première extrémité de ladite au moins une bobine d'induction (105) dudit premier élément de détection (131) à une première extrémité (198) d'une première source de tension alternative (101), à connecter une deuxième extrémité de ladite au moins une bobine d'induction (105) dudit premier élément de détection (131) à un premier point de connexion (199), à connecter ledit premier point de connexion (199) à une deuxième extrémité (181) de ladite première source de tension alternative (101), à connecter ladite deuxième extrémité (181) de ladite première source de tension alternative (101) à une tension de référence et à interposer un dispositif détecteur (162) entre ledit premier point de connexion (199) et ladite deuxième extrémité (181) de ladite première source de tension alternative (101) afin de fournir des informations sur la grandeur du courant s'écoulant entre ledit premier point de connexion (199) et ladite deuxième extrémité (181) de ladite première source de tension alternative (101), lesdites informations représentant la valeur d'une modification x apportée à la largeur dudit entrefer qui présente une valeur nominale prédéterminée $g_0$ le long dudit premier axe X-X', ce procédé comprenant en outre l'étape consistant à connecter un condensateur $C_1$ (172) en série entre ledit premier point de connexion (199) et ladite deuxième extrémité de ladite au moins une bobine d'induction (105) dudit premier élément de détection (131).

12. Procédé de type à inductance variable selon la revendication 11, comprenant en outre l'étape consistant à connecter un condensateur $C_2$ (171) en parallèle entre ladite première extrémité (198) de ladite première source de tension alternative (101) et ledit premier point de connexion (199).

13. Machine électrique rotative ou dispositif palier magnétique radial, **caractérisé en ce qu'**il comprend un système de détection de position radiale de type à inductance variable selon l'une quelconque des revendications 1 à 10.

**FIG.1**

**FIG.2**

**FIG.3**

**FIG.4**

$$C_1 = 1/w^2 L_\sigma$$
$$C_2 = 1/w^2 L_0 \implies \frac{\hat{i}_s}{\hat{i}_0} = x/g_0$$

**FIG.5**

**FIG.6**

**FIG.7**

FIG.8

FIG.9

FIG.10

$$\frac{i_s}{i_0} = \frac{1}{L_\sigma/L_0 + 1/(1+x/g_0)} - \frac{1}{L_\sigma/L_0 + 1/(1-x/g_0)} \qquad (2)$$

FIG.11

FIG.12
Prior art

**FIG.13**

**FIG.14**

**FIG.15**

**FIG.16**
Prior art

# FIG.17
Prior art

$$L_1 = L\sigma + L(x) = L\sigma + L_0/(1+x/g_0)$$

$$L_2 = L\sigma + L(x) = L\sigma + L_0/(1-x/g_0)$$

# FIG.18
Prior art

$$\frac{u_s}{u} = \frac{x}{g_0} \cdot \frac{1}{1 + L_\sigma/L_0 (1- x^2/g_0^2)} \tag{1}$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120263577 A1
- US 5844339 A